# EUROPEAN PATENT APPLICATION

(11) **EP 3 719 471 A1**
(43) Date of publication of application: **07.10.2020**
(21) Application number: 19166956.3
(22) Date of filing: 03.04.2019
(51) Int. Cl.: G01M 3/22, G01M 3/02, G01M 3/20, G01N 1/22

(54) **A LEAKAGE DETECTOR SYSTEM**

(71) Applicant: DASPOS A/S, 2730 Herlev (DK)
(72) Inventor: JØRGENSEN, Torben, 2730 Herlev (DK); GLADE, Anders, 2730 Herlev (DK)
(74) Representative: Hoffmann Dragsted A/S

(57) **Abstract**

The present invention relates to a leakage detector system comprising a substantially closed chamber being defined by at least one face, the face having an interior surface and an exterior surface, the substantially closed chamber containing a gas and/or a fluid, a detector unit comprising a detector housing having a first housing member configured to house a detector device, and a second housing member configured to house a sensor for detecting the presence of gas and/or fluid in the substantially closed chamber, the sensor is operatively connected with the detector device, wherein the first housing member is configured to be arranged on the exterior surface, and the second housing member extends from the first housing member and is configured to project through a face hole in the at least one face so that the second housing member is arranged in the substantially closed chamber ensuring that the sensor detects inside the substantially closed chamber.

## Description

The present invention relates to a leakage detector system especially for detecting presence of fuel, diesel or hydraulic oil or gasses containing hydrocarbons. The present invention may also be used to detect leakage of other gasses and/or fluids.

Oil leaking out of e.g. a high pressure conduit for the supply of fuel in a vessel is hazardous due to the risk of fire and/or explosion. Moreover, if an oil leakage in an engine room is discovered late, the leaked oil will cover all surfaces in the engine room and leave an immense cleaning task for the crew. For these reasons, it is desirable to detect an oil leakage as early as possible.

Various oil leakage detectors are known from the prior art. For instance optical systems are known, in which light reflected from oil particles or droplets is detected. Systems relying on optics and light for detecting the presence of oil have become popular, however, they suffer from the drawback that they react too slowly in case an oil leakage produces relatively large droplets of oil, as they do not emit a warning signal until the density of oil by far exceeds the acceptable threshold value. This is believed to be due to the fact that large oil particles or droplets provide a relatively small reflection per unit weight in comparison to smaller particles, which provide a higher reflection per unit weight. Accordingly, there is a need for a leakage detector system which is reliable and which emits the appropriate warning signal in due time.

It is an object of the present invention to wholly or partly overcome the above disadvantages and drawbacks of the prior art. More specifically, it is an object to provide an improved leakage detector system which is easy to implement and incorporate in existing facilities having the above-mentioned drawbacks and challenges.

The above objects, together with numerous other objects, advantages and features, which will become evident from the below description, are accomplished by a solution in accordance with the present invention by a leakage detector system comprising
- a substantially closed chamber being defined by at least one face, the face having an interior surface and an exterior surface, the substantially closed chamber containing a gas and/or a fluid,
- a detector unit comprising a detector housing having
   - a first housing member configured to house a detector device, and
   - a second housing member configured to house a sensor for detecting presence of the gas and/or fluid in the substantially closed chamber, the sensor is operatively connected with the detector device,
wherein the first housing member is configured to be arranged on the exterior surface, and the second housing member is extending from the first housing member and is configured to project through a face hole in the at least one face so that the second housing member is arranged in the substantially closed chamber ensuring that the sensor detects inside the substantially closed chamber.

Hereby, a leakage detector system which is easy to implement in existing facilities for instance by retrofitting it and which subsequently may easily be serviced and performed maintenance on is obtained.

Furthermore, the leakage detector system may comprise a control unit being operatively connected with the detector device.

Also, the control unit may be configured to output a warning signal if the sensor detects gas and/or fluid in the substantially closed chamber exceeding a predetermined threshold value.

The predetermined threshold value may be set according to the gas and/or fluid to be detected.

Additionally, the sensor and the control unit may be configured to continuously monitor the substantially closed chamber, the control unit being further configured to output an error signal if the sensor detects gas and/or fluid in the substantially closed chamber exceeding a second predetermined threshold level, which is lower than said first predetermined threshold level.

Moreover, the control unit may be configured to output the error signal only if the sensor detects gas and/or fluid in the substantially closed chamber exceeding the second predetermined threshold pressure level for a predetermined period of time.

The leakage detector system may comprise a locking member which is arranged on the exterior surface.

The locking member may be configured to lock the detector housing to the face.

Furthermore, the detector housing may be detachable from the locking member.

Moreover, the locking member may comprise first engagement parts, the detector housing comprising second engagement parts, the first engagement parts and the second engagement parts being configured to engage each other.

The detector housing may be inserted in the locking member and turned clockwise or anticlockwise to lock the detector housing to the locking member.

In addition, the detector housing may be turned in opposite direction for unlocking the detector housing to the locking member.

Also, the first engagement parts and the second engagement parts may be mechanically locked to each other.

Additionally, a snap closing mechanism may be arranged for ensuring that the detector housing is kept in the locked position in relation to the locking member.

Furthermore, the locking member may be securely connected with the face. For instance the locking member may be fastened to the face by means of bolts and locking nuts.

Advantageously, a sealing element may be arranged between the locking member and the exterior surface.

The second housing member may have one or more house openings for ensuring that the sensor can detect gas and/or fluid.

Also, the substantially closed chamber may be an engine chamber of a combustion engine.

The engine chamber may be a hot-box.

Furthermore, the detector unit is operatively connected with the control unit.

Also, the detector unit may be wirelessly connected with or wirely connected with the control unit.

In addition, the detector housing may comprise a cable gland configured to connect a cable or wire to the detector device.

Moreover, the gas and/or fluid may comprise hydrocarbons.

The sensor may be a gas sensor. The gas sensor may be configured to detect hydrocarbon, carbon monoxide and/or carbon dioxide. The gas sensor may also be configured to detect other gasses.

Furthermore, the detector unit and/or the sensor may be configured to operate from about -25 degrees Celsius to about 200 degrees Celsius.

The sensor may be configured to detect above 0.002mg/l.

The control unit may be configured to output the warning signal if the sensor detects hydrocarbons in the gas and/or fluid in the substantially closed chamber exceeding a predetermined threshold value of hydrocarbons.

Moreover, the system may comprise a plurality of detector units.

Also, the system may have a surrounding atmosphere arranged outside the substantially closed chamber.

The surrounding atmosphere may be in an engine room.

The system may also comprise an oil leakage detector arranged in the environment space, comprising:
- a conduit for an airflow therethrough;
- a screen in the conduit, the screen being meshed in order to at least partially prevent oil particles or droplets from passing therethrough;
- a second sensor for determining a pressure loss across the screen;
- the control unit operatively connected to the second sensor, the control unit being configured to output a second warning signal if the pressure loss exceeds a predetermined threshold pressure value;
wherein the second sensor and the control unit are arranged to continuously monitor said pressure loss, the control unit being further
configured to output a second error signal if the pressure loss exceeds a second predetermined threshold pressure level, which is lower than said first predetermined threshold pressure level;
the control unit is configured to output the second error signal only if the pressure loss exceeds the second predetermined threshold pressure level for a second predetermined period of time.

It will thus be appreciated that the present detector relies on optical detection of light reflection, but rather on a pressure measurement. Thanks to the provision of a screen and a pressure sensor for detecting the pressure loss across the screen, drawbacks related to light reflection are overcome. Tests have shown that the present invention detects relatively large oil particles as well as relatively small oil particles in a reliable manner.

The oil leakage detector may further comprise a fan for providing said airflow through the conduit. For a typical vessel application, the fan may be configured to generate an airflow of 500 - 1500 m³ per hour. In one embodiment, the fan provides approximately 600 m³ per hour. Preferably, the oil leakage detector is dimensioned to be arranged in the engine room of a vessel. It may e.g. be mounted to a wall, floor or ceiling surface in an engine room and comprise means for its mounting at such a location. Several detectors may be connected to a common control panel.

The conduit may inexpensively be formed by a standard vent pipe, which is perforated to allow air to be drawn into the pipe. Preferably, the screen is arranged at a downstream location in the conduit. The fan may be arranged upstream or downstream of the screen. In a preferred embodiment, the fan is arranged downstream of the screen.

In addition, the oil leakage detector may comprise a second gas sensor for determining the presence of at least one gas in the airflow in the conduit. The second gas sensor may e.g. be for the detection of hydrocarbon, carbon monoxide and/or carbon dioxide. In one embodiment, the second gas sensor causes the control unit to output a warning signal if the concentration of one of the aforementioned gases exceeds a predetermined concentration threshold value, in particular if the concentration of hydrocarbon and/or carbon monoxide exceeds a carbon monoxide concentration threshold value.

The control unit may be connected with the second gas sensor. In order to provide a warning if there is an error in electrical parts of the control unit, the sensors or the power supply, a signal may be emitted e.g. if the second gas sensor output current drops below a predetermined value, such as below 4 mA. Likewise, a signal may be emitted if the electrical output of the pressure sensor drops below a predetermined value, corresponding e.g. to a pressure drop below 80 - 120 Pa, such as below 100 Pa.

Also, the control unit may be configured to emit an error signal and/or said warning signal in one or more of the following events:
- the pressure loss exceeds a predetermined threshold pressure value due to oily atmosphere;
- fan failure;
- clogged screen;
- gas sensor failure.

In order to determine the difference between a clogged screen and the presence of an oil leakage, the control unit is configured to monitor the pressure loss across the screen over time, i.e. continuously. A relatively sudden and significant increase of pressure loss within e.g. minutes or a few hours indicates the presence of oil in the air drawn through the conduit and thus an oil leakage. In contrast, a slow increase of pressure loss over e.g. several days to a pressure loss above a certain limit indicates that the screen has become clogged.

In one embodiment, the pressure loss across the screen is 100 - 170 Pa under normal conditions (no oil leakage). In the case of a relatively sudden increase of pressure loss to above 180 Pa, an oil leakage warning signal is emitted. In the case of a relatively slow increase of pressure loss to above 170 Pa, a warning signal is emitted to indicate that the screen is clogged. A fan failure warning is emitted in the case of a pressure loss less than 100 Pa.

The difference between a clogged screen and the presence of an oil leakage may be determined in embodiments, in which the second sensor and control unit are configured to monitor the pressure loss over time, i.e. continuously, and wherein the control system is configured to output:
- the warning signal if the pressure loss exceeds said first predetermined threshold value; and
- an error signal if the pressure loss exceeds a second predetermined threshold level for a predetermined period of time.

The second predetermined threshold level is smaller than the first predetermined threshold level. Hence, a relatively low pressure drop exceeding the second threshold level does not produce the warning signal indicative of an oil leakage. However, if the pressure drop exceeds the second threshold level for some time, this indicates that the screen is clogged by contamination other than contamination deriving from an oil leakage.

For example, a pressure loss of more than 150 Pa in more than 2 minutes results in the generation of the error signal. In preferred embodiments, a pressure loss of more than 200 Pa in 5-80 minutes, results in the generation of the error signal.

In a preferred embodiment, a warning signal indicative of an oil leakage is provided at a pressure loss of 225 Pa.

Preferred embodiments of the invention also provide a fan error signal, if the pressure loss across the screen is below a third threshold value, e.g. 80 - 120 Pa, such as 100 Pa.

The screen may form a plurality of openings for the airflow, the screen being made from e.g. a wire mesh. For reliable oil particle detection, the centre distance between neighbouring openings (equal to the centre distance between neighbouring wires) may be in the range of 10 - 100 µm, such as 30 - 80 µm, such as 40 - 80 µm. In one embodiment, a centre distance of approximately 73 µm has been applied. The diameter of the meshes of the screen may be in the range of 5 - 50 µm, such as 10 - 30 µm, such as approximately 20 µm.

The screen may be essentially made from meshes with a diameter of 5-50 µm.

Also, the fan may be arranged at a downstream end of the conduit.

The invention also relates to a combustion engine comprising the system as described above.

The invention also relates to a vessel or offshore facility comprising the system as described above.

The invention and its many advantages will be described in more detail below with reference to the accompanying schematic drawings, which for the purpose of illustration show some non-limiting embodiments and in which:
Fig. 1 shows a leakage detector system according to the present invention in a cross-sectional view,
Fig. 2 shows an enlarged view of the area C of Fig. 1 in a cross-sectional view,
Figs. 3-5 show an embodiment of a detector unit of the leakage detector system,
Fig. 6 shows the detector unit partly separated,
Fig. 7 shows an enlarged view of the area D of Fig. 6,
Figs. 8-10 show an embodiment of the detector housing of the detector unit,
Figs. 11-12 show an embodiment of a locking member,
Fig. 13 shows in exploded view the detector unit and locking member,
Fig. 14 shows a detector unit arranged in relation to a combustion engine,
Fig. 15 shows an enlarged view of the area E of Fig. 14,
Fig. 16 shows an embodiment of positioning a plurality of detector units in relation to a combustion engine,
Fig. 17a shows another embodiment of a leakage detection system,
Fig. 17b shows yet another embodiment of the leakage detection system,
Fig. 18 shows a first embodiment of an oil leakage detector which may be used in connection with the leakage detector system according to the invention,
Fig. 19 shows a screen of the oil leakage detector of Fig. 18,
Fig. 20 shows a sketch of a wire mesh of the screen of Fig. 19, and
Figs. 21-23 show a second embodiment of an oil leakage detector which may be used in connection with the leakage detector system according to the invention.

All the figures are highly schematic and not necessarily to scale, and they show only those parts which are necessary in order to elucidate the invention, other parts being omitted or merely suggested.

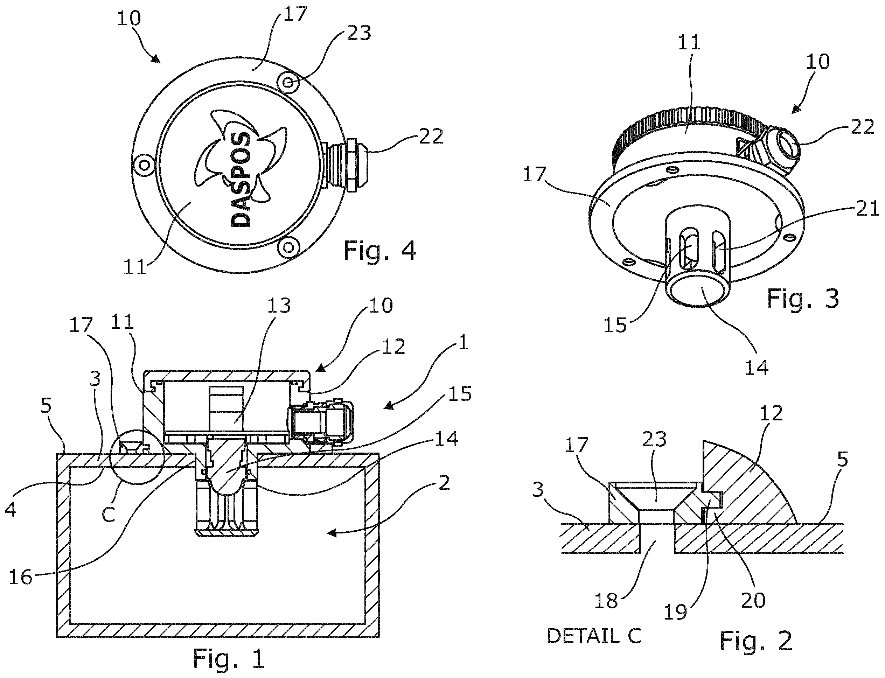

Fig. 1 shows a leakage detector system 1 according to the present invention. The leakage detector system comprises a substantially closed chamber 2 being defined by at least one face 3, the face 3 having an interior surface 4 and an exterior surface 5, the substantially closed chamber 2 containing a gas and/or a fluid.

The leakage detector system 1 also comprises a detector unit 10 comprising a detector housing 11 having a first housing member 12 configured to house a detector device 13, and a second housing member 14 configured to house a sensor 15 for detecting presence of the gas and/or fluid in the substantially closed chamber 2, the sensor 15 is operatively connected with the detector device 13. The first housing member 12 is configured to be arranged on the exterior surface 5, and the second housing member 14 extends from the first housing member 12 and is configured to project through a face hole 16 in the at least one face 3 so that the second housing member 14 is arranged in the substantially closed chamber 2 ensuring that the sensor 15 detects inside the substantially closed chamber 2.

The sensor 15 may be a gas sensor, which may be configured to detect hydrocarbon, carbon monoxide and/or carbon dioxide. The gas sensor may also be configured to detect other gasses.

Furthermore, the detector unit and/or the sensor 15 may be configured to operate from about -25 degrees Celsius to about 200 degrees Celsius.

In Fig. 1 an area C is encircled. This area C is shown enlarged in Fig. 2. The area C shows a locking member 17 on the exterior surface 5, the locking member 17 is configured to lock the detector housing 11 to the face 3 so that the detector unit in an easy manner may be connected to the face 3. The locking member 17 may be connected to the face 3 by inserting a bolt (not shown) first through the member hole 23 and then through the second face hole 18. In other embodiments, the locking member may fasten to the face with an adhesion or welding.

In a preferred embodiment the detector housing is detachable from the locking member 17. As shown in Fig. 2, the locking member comprises first engagement parts 19, and the detector housing 11 comprises second engagement parts 20, the first engagement parts 19 and the second engagement parts 20 are configured to engage each other. The first and second engagement parts will be described further below.

Figs. 3-5 show different views of the detector unit 10 and locking member 17. In Fig. 3, the detector unit 10 and the locking member 17 are shown in a perspective view taken partly from below. As illustrated, the second housing member 14 extends from the first housing member 12 and is configured to house the sensor 15 for detecting the presence of gas and/or fluid in the substantially closed chamber 2, the sensor 15 is operatively connected with the detector device which is comprised in the first housing member. For enabling that the sensor 15 may unhindered detect and/or monitor the environment inside the closed chamber, house openings 21 are provided in the second house member 14. Hereby the sensor 15 has unimpeded access to the gas and/or fluid present in the closed chamber. Furthermore, by arranging the sensor 15 in the second housing member 14, the sensor 15 is protected.

In the present embodiment, the detector unit 10 is operatively connected with a control unit (not shown) via a wire or cable. The wire or cable is connected to the detector device arranged inside the first housing member via a cable gland 22.

In other embodiments, the detector device may be connected with the detector device wireless.

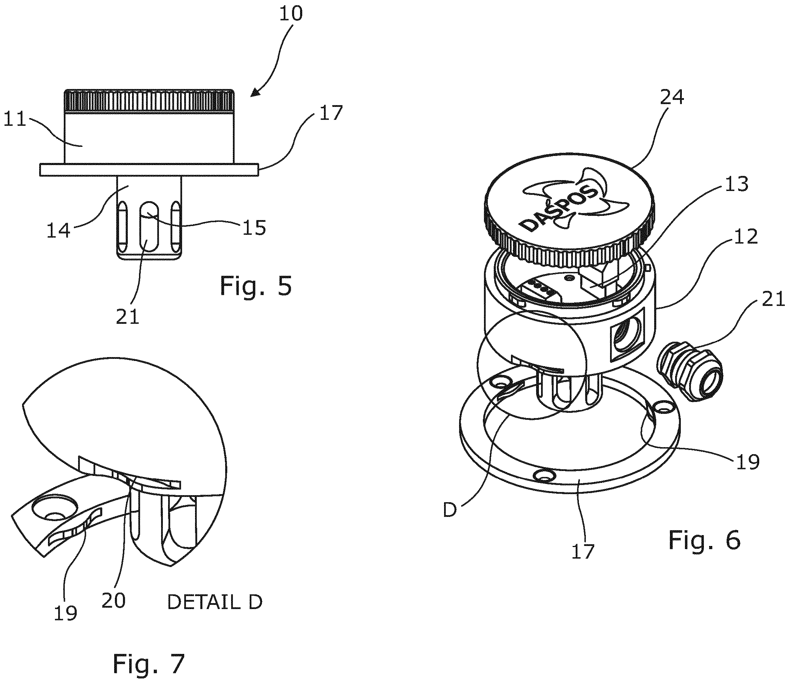

Figs. 4 and 5 show the detector unit 10 and the locking member 17 in a top view and a side view, respectively.

The detector housing may be made of metal, a ceramic material or a composite material or a combination thereof. Preferably, the material is configured to withstand varying temperatures as well as high temperatures without loosing its structural strength. Also, the detector housing may be positioned in areas where it may be exposed to different impacts, wherefore the detector housing is preferably made of a material which has a certain strength to withstand the possible impacts.

In Fig. 6 the detector unit is separated from the locking member 17. In addition, the first housing member 12 has a lid 24 which may be screwed onto the first housing member 12 so that the inside of the detector housing is accessible. Inside the detector housing, the detector device 13 is arranged so that the different components of the detector device 13 may be protected. Furthermore, the cable gland 22 has been separated from the first housing member 12.

As mentioned above, the locking member 17 has first engagement means 19 configured to engage second engagement means 20 on the detector housing. The first engagement means 19 and the second engagement means 20 are disclosed enlarged taken from the area D in Fig. 6.

The detector housing may be inserted in the locking member 17 and turned clockwise or anticlockwise in order to lock the detector housing to the locking member. In the present embodiment, the detector housing is turned clockwise to lock the detector housing to the locking member 17 and in the opposite direction for unlocking.

Preferably, the first engagement parts 19 and the second engagement parts 20 are mechanically locked to each other ensuring that the detector unit is maintained in position during operation, while demounting of the detector unit for maintenance and services may easily be facilitated.

Also, a snap closing mechanism may be arranged for ensuring that the detector housing is kept in the locked position in relation to the locking member.

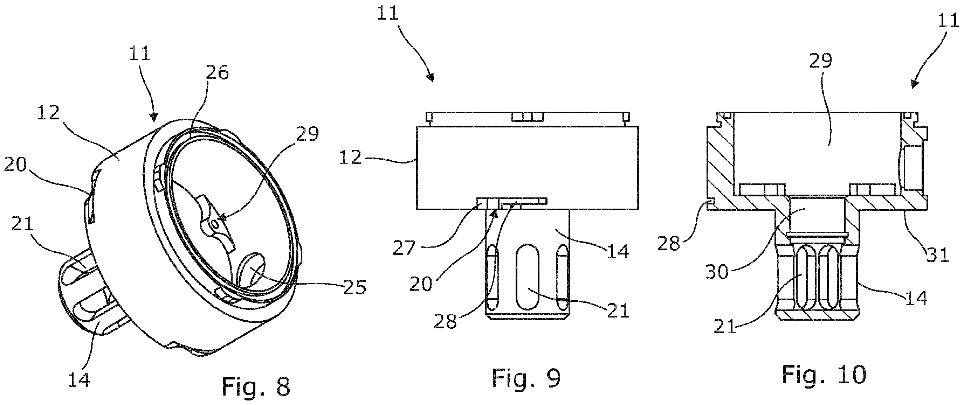

Figs. 8-10 show an embodiment of the detector housing 11 of the detector unit. Fig. 8 shows the detector housing 11 in perspective. The detector housing is without the lid in the present figure. As mentioned above, the lid may be screwed onto the detector housing 11 by the thread 26. The first housing part 12 defines an interior space 29 of the detector housing wherein the detector device may be arranged. Furthermore, the first housing part 12 has a gland opening 25 which is configured to receive the cable gland (not shown). In the opposite end of the thread 26, the second engagement means 20 are arranged. The second housing member 14 projects from the first housing member 12, and has a plurality of house openings 21 arranged around the circumference, so that gas and/or fluid may flow into the vicinity of the sensor for enabling it to detect. In Fig. 9, an embodiment of the second engagement means 20 is shown. In the present embodiment, the second engagement means 20 comprises a recess 27 having a substantially vertical extension, the recess 27 is in connection with a groove 28 having a substantially horizontal extension so that when the detector housing is to be engaged with the locking member (not shown), the recess 27 of the second engagement means 20 is aligned with the first engagement means 19 of the locking member, whereby the first engagement means 19 is directed up in the recess 27. Subsequently, the detector housing may be turned in a clockwise direction so that the first engagement means is moved into the groove 28. Hereby, the detector housing is secured to the locking member while it is still able to be disengaged in an easy manner. Fig. 10 shows the detector housing 11 in a cross-sectional view. The first housing member 12 has a bottom 31 which is configured to abut the face of the closed chamber when placed in connection with the locking member. In the bottom, a sensor opening 30 is provided so that the sensor may be inserted from the interior space 29 into second housing member 14 via the sensor opening 30. In addition, the groove 28 is shown.

In the present embodiment, the detector housing 11 has a circular configuration when seen from a top view, however, it may have other configurations such as for instance square, oval, triangular or other suitable shapes.

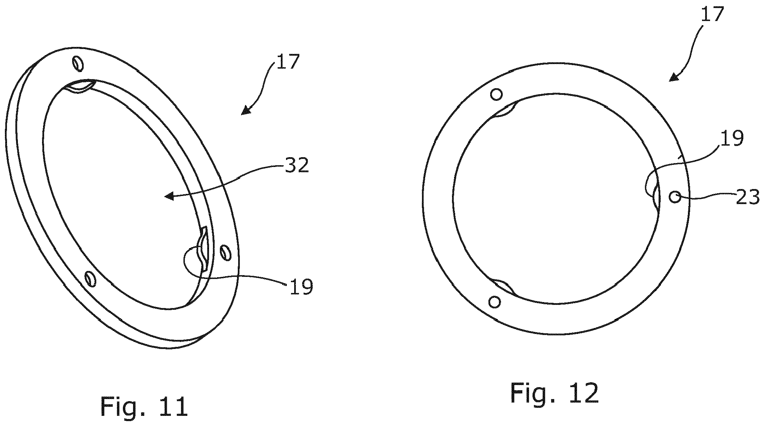

Figs. 11-12 show an embodiment of a locking member 17. In the present embodiment, the locking member is ring-shaped. The locking member 17 is configured to be securely connected with the face for instance by means of bolts through the member holes 23 and locking nuts on the opposite side of the face. The first engagement means 19 are projections configured to engage the second engagement means of the detector housing.

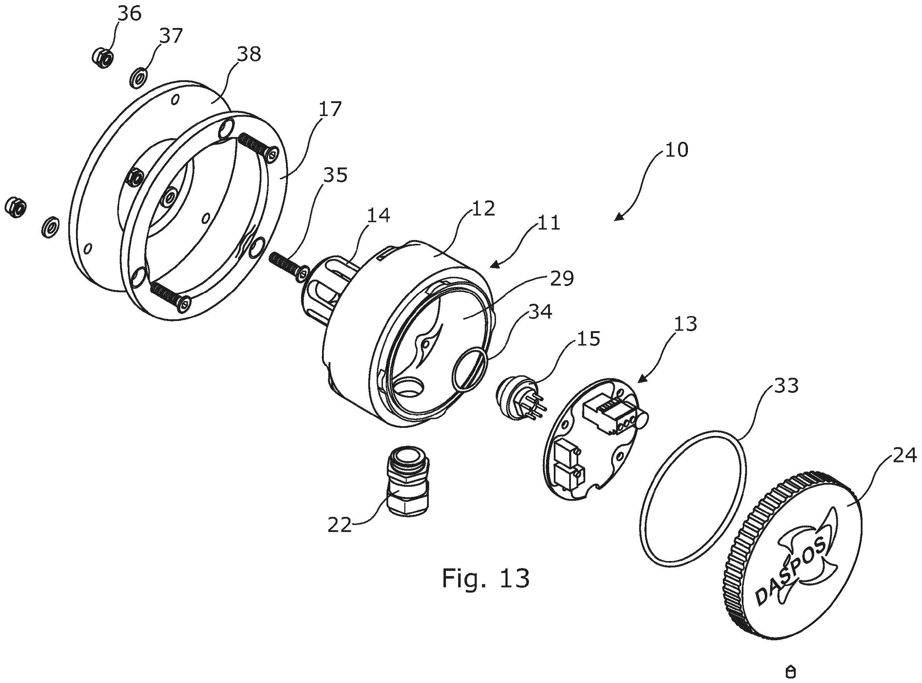

Fig. 13 is an exploded view of a leakage detector unit 10 according to the present invention. In the present embodiment, the leakage detector system has the detector house 11, which comprises a first housing member 12 and a second housing member 14. The sensor 15 is arranged in via the first housing member 12 in the second housing member 14, and a first sealing O-ring 34 is arranged around the sensor 15 for ensuring that gas and/or fluid does not enter the inside of the first housing member 12. The sensor 15 is operatively connected with the detector device 13, which again is operatively connected with a control unit (not shown). In the present embodiment, the detector device is wirely connected to the control unit via cable gland 22. The interior space 29 of the first housing member 12 is closed off by the lid 24 having a second sealing O-ring 33 arranged between the lid 24 and the first housing member 12.

As mentioned above, the detector unit 10 is connected to the face of the closed chamber via a locking member 17. In the present embodiment, the locking member 17 is bolted by bolts 35 to the face (not shown) and fastened via the washers 37 and locking nuts 36 on the opposite side of the face i.e. the interior surface. Hereby, it is obtained that the locking member 17 only has to be mounted one time to the face, and subsequently the detector unit 10 may be disengaged from the locking member 17 for maintenance and service of the detector device 13 and the sensor 15 and after maintenance and service be mounted again via the locking member 17

In addition, between the locking member 17 and the face (not shown), a sealing element 38 is arranged for ensuring that the interior of the closed chamber is sealed of in relation to the environment space. In addition, the sealing element 38 may also ensure that vibrations and movements exerted to the detector unit is minimised.

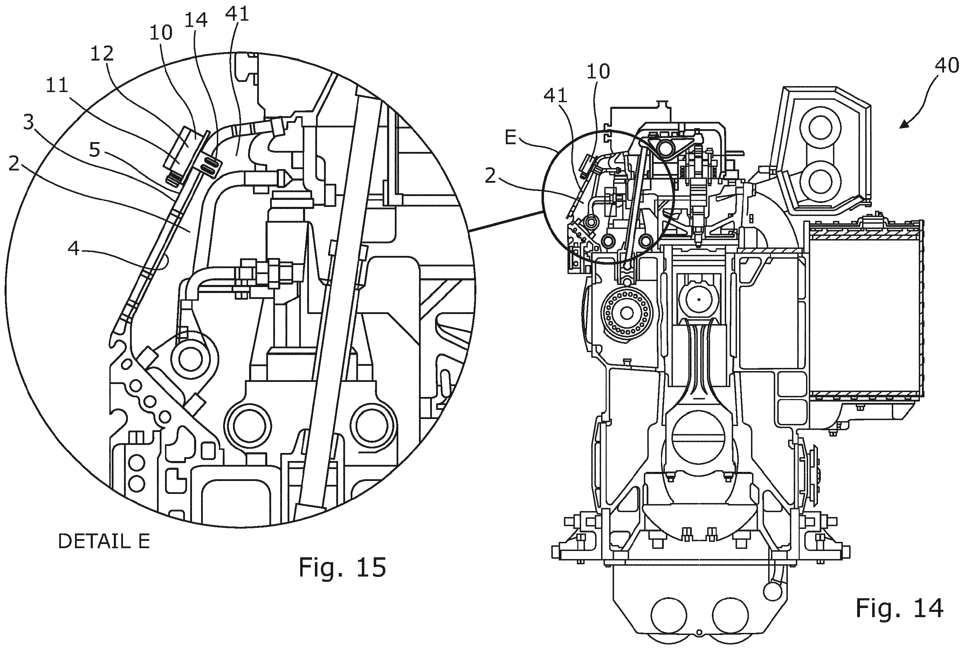

In Fig. 14, a combustion engine 40 is shown. The combustion engine 40 may for instance be a two-stroke or a four-stroke combustion engine used on a vessel or offshore facility. The combustion engine 40 may comprise an engine chamber being the substantially closed chamber 2. In the present embodiment, the engine chamber 2 is a hot-box 41. The detector unit 10 is arranged in connection with the hot-box 41.

Fig. 15 is an enlarged view of the area E of Fig. 14. The hot-box 41, i.e. the closed chamber 2, is defined by the face 3. The face 3 has the interior surface 4 and the exterior surface 5. The hot-box 41 may contain gasses or fuel vapours having hydrocarbons. These gasses and fuel vapours may ignite and thereby start an unwanted fire in the engine room.

The detector unit 10 comprising a detector housing 11 is arranged in connection with the hot-box 41, so that the first housing member 12 is arranged on the exterior surface 5 of the hot-box 41 and the second housing member 14 projects through the face 3 so that it is arranged in the hot-box 41. Hereby, the sensor (not shown) placed in the second housing member 14 and the control unit (not shown) are configured to output a warning signal if the sensor detects gasses and/or fuel moist containing hydrocarbons in the hot-box 41 exceeding a first predetermined threshold value.

In addition, the sensor (not shown) and the control unit (not shown) may further continuously monitor the hot-box 41, the control unit being further configured to output an error signal if the sensor detects gasses and/or fuel moist containing hydrocarbons in the hot-box 41 exceeding a second predetermined threshold level, which is lower than said first predetermined threshold level.

The control unit is configured to output the error signal only if the sensor detects gasses and/or fuel moist containing hydrocarbons in the hot-box 41 exceeding the second predetermined threshold pressure level for a predetermined period of time.

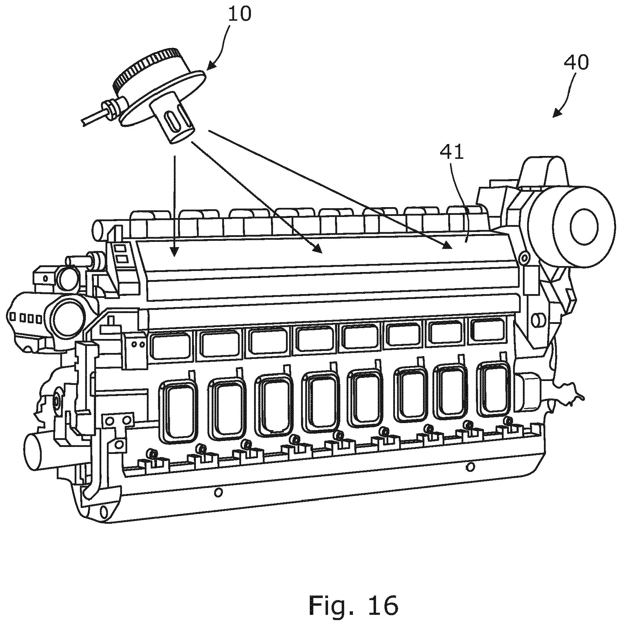

Fig. 16 shows that a plurality of detector units 10 may be arranged at different locations at the hot-box 41 of the combustion engine 40.

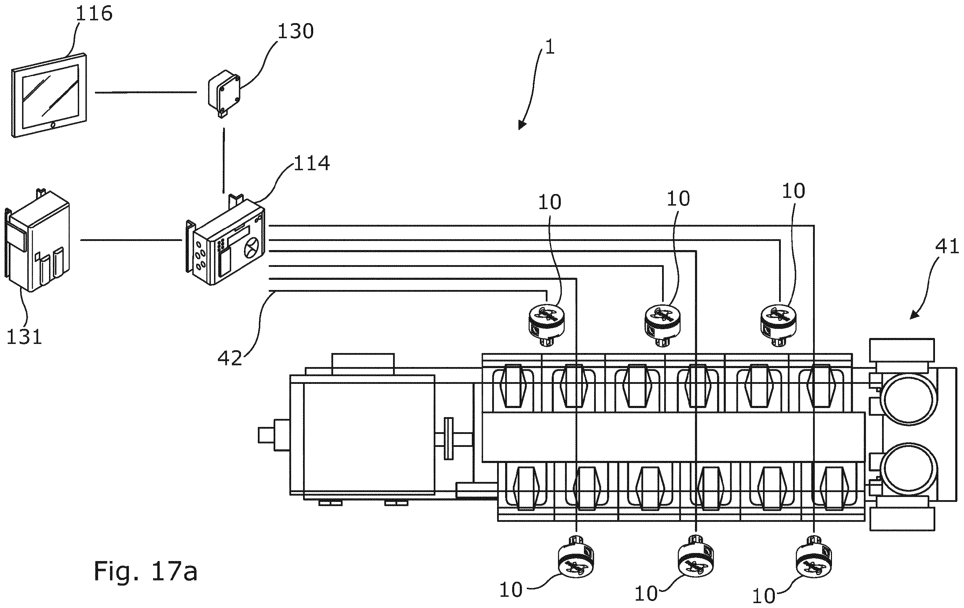

Fig. 17a shows an embodiment of the leakage detector system 1 according to the invention. The leakage detector system 1 is arranged in connection with a combustion engine 41. In the present embodiment, six detector units 10 are arranged for detection inside the hot-box of the combustion engine 41. The detector units 10 are connected with the control unit 114 via cables 42. The control unit 114 is connected to a display 116 via an interface 130. The detector system 1 may be powered via power supply 131.

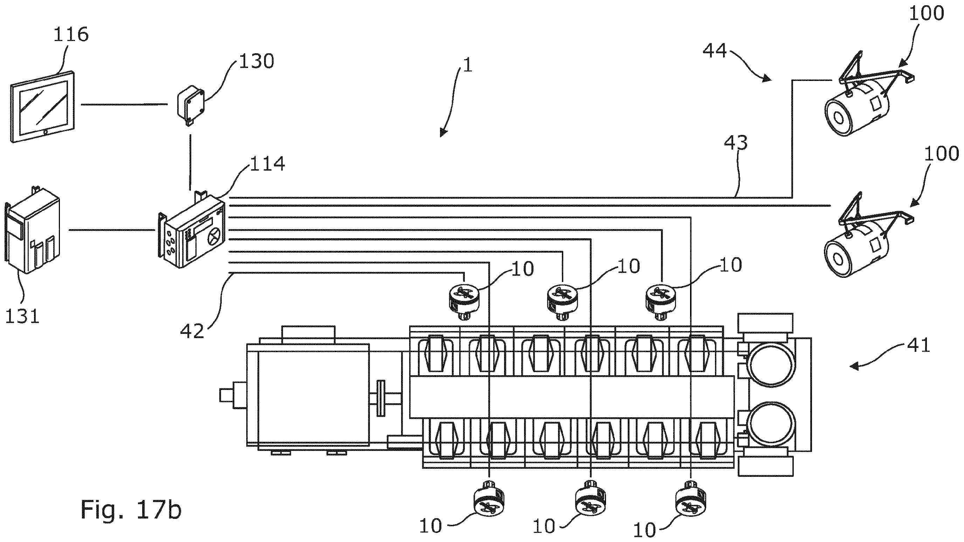

Fig. 17b shows another embodiment of the leakage detector system 1. The leakage detector system 1 is very similar to the embodiment shown in Fig. 17a in that the leakage detector system 1 is also arranged in connection with a combustion engine 41. In the present embodiment, six detector units 10 are arranged for detecting inside the hot-box of the combustion engine 41. The detector units 10 are connected with the control unit 114 via cables 42. Furthermore, the combustion engine 41 is arranged in an engine room having an environment space 44. In the environment space, oil leakage detectors 100 may be arranged, the oil leakage detectors 100 are connected to the control unit 114 via cables 43. In the same manner as described in relation to Fig. 17a, the control unit 114 is connected to a display 116 via an interface 130. The detector system 1 may be powered via power supply 131. The oil leakage detectors 100 will be described further below.

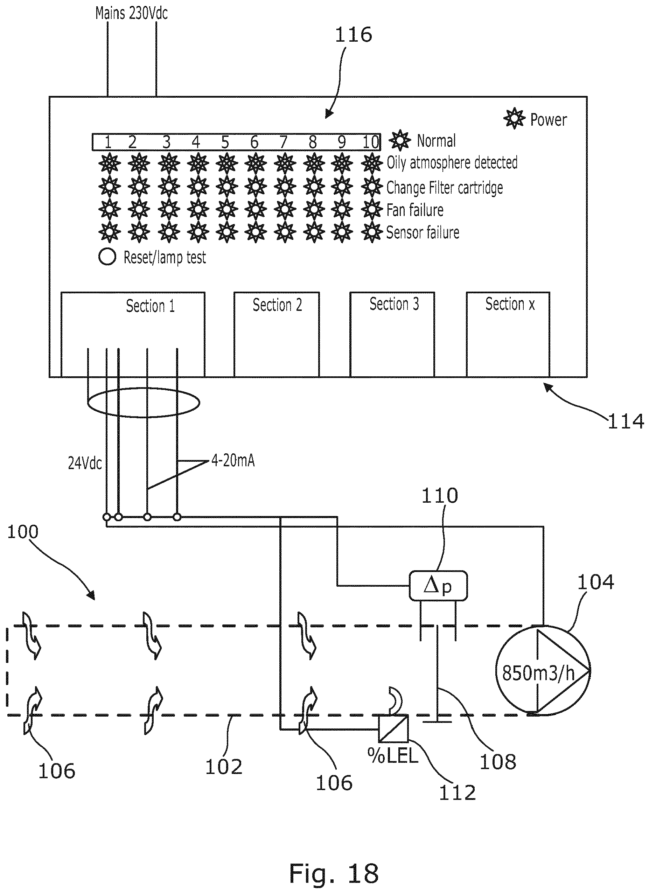

An oil leakage detector 100 is shown in Fig. 18. The oil leakage detector 100 comprises a perforated conduit 102. At a downstream end of the conduit 102, a fan 104 is provided for generating an airflow through the conduit. As illustrated by arrows 106, the fan draws air from the surrounding atmosphere, e.g. the engine room of a vessel, through the conduit. A screen 108 is provided upstream of the fan 104, but yet at a downstream location in the conduit 102. A pressure sensor is provided for determining the pressure loss across the screen 108, and a second gas sensor 112 is optionally included in the vicinity of the screen 108. The pressure sensor 110, the fan 104, and the second gas sensor 112 are connected with a control unit 114 including a display panel 116 with warning lamps for emitting warning signals as described in the above summary of the invention. It will be appreciated that the control unit 114 may be connected to a plurality of detector units, oil leakage detectors and/or to other surveillance equipment.

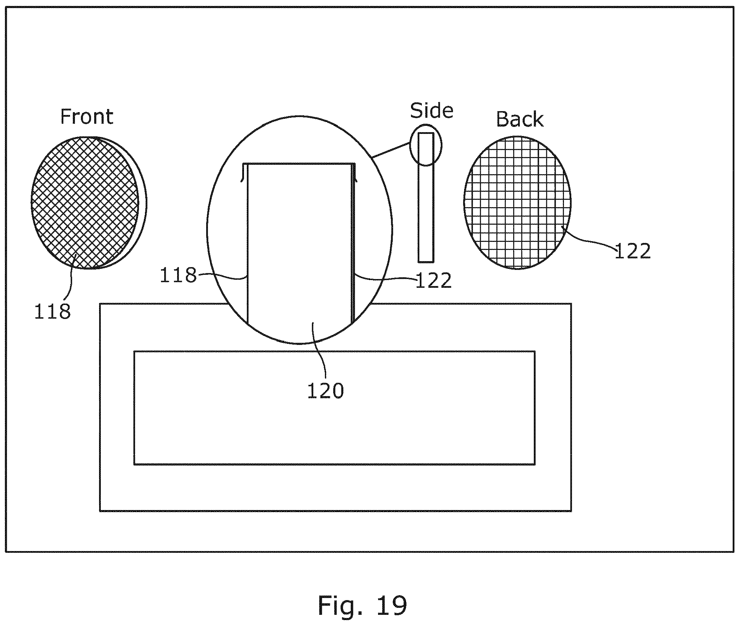

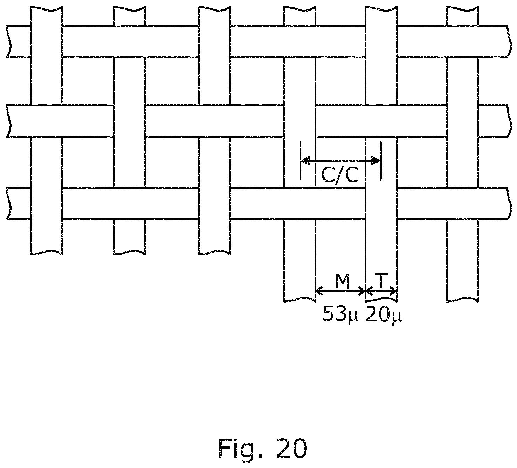

The screen 108 of the oil leakage detector is shown in more detail in Fig. 19. A front of the screen includes an oil droplet filter 118 in the form of a wire mesh (cf. Fig. 20). The oil droplet filter 118 is supported by a support structure 120. The support structure 120 should be open but yet stable. For example, the support structure may include a honeycomb structure of e.g. aluminium or siliconized paper. A further support 122 is provided at the back of the support structure, such as e.g. a coarse wire mesh of steel.

Fig. 20 includes a sketch of the wire mesh 118. The centre distance between neighbouring openings is denoted C/C and may be in the range of 10 - 100 µm, such as 30 - 80 µm, such as 40 - 80 µm, such as approximately 70 µm. In one embodiment, a centre distance of approximately 73 Pm has been applied. The diameter of the meshes of the screen is denoted T and may be in the range of 5 - 50 µm, such as 10 - 30 µm, such as approximately 20 µm. The size of the meshes is denoted M. In the embodiment shown, the diameter T of the meshes of the screen is approximately 20 µm, the centre distance C/C is approximately 73 µm, and the size of the meshes M is approximately 53 µm.

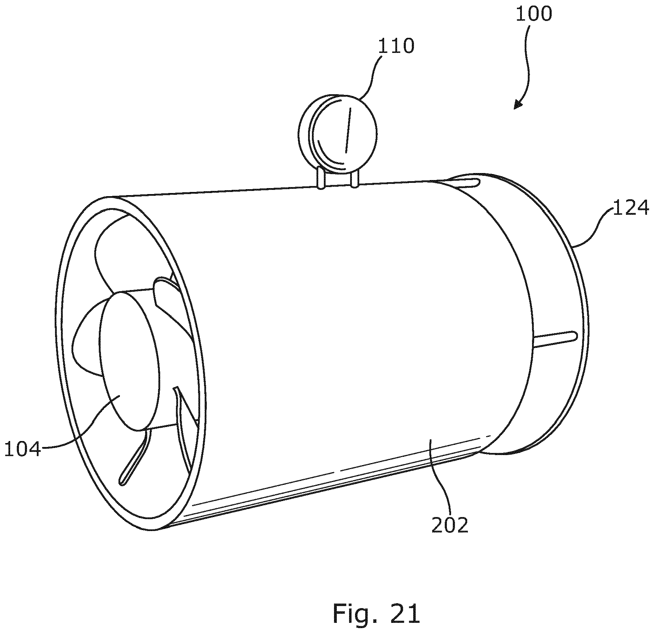

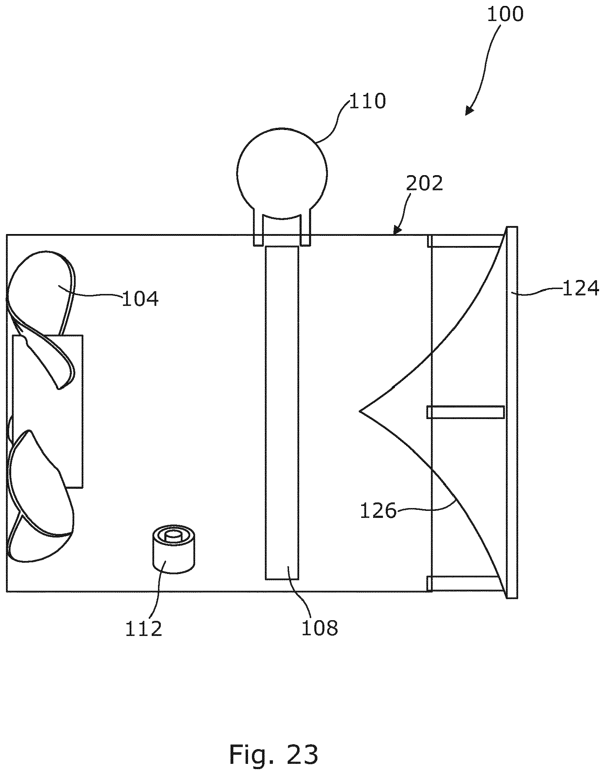

Figs. 21-23 show a second embodiment of an oil leakage detector 100. As shown in the cross-sectional view of Fig. 23, the oil leakage detector comprises a non-perforated conduit 202 with an end member 124 at its inlet end, the end member being spaced from an end of the conduit 202 to provide a lateral inlet opening to the conduit. The end member 124 forms a cone-like member 126 for guiding a flow of air into the conduit 202. The conduit 202 accommodates screen 108, pressure sensor 110, second gas sensor 112, and fan 104 at the downstream end, i.e. outlet end, of the conduit 202. The end member 124 may house control electronics receiving electrical output signals of the pressure sensor 110 and second gas sensor 112 and possibly other control equipment. Likewise, warning signal emitters may be included in the end member 124.

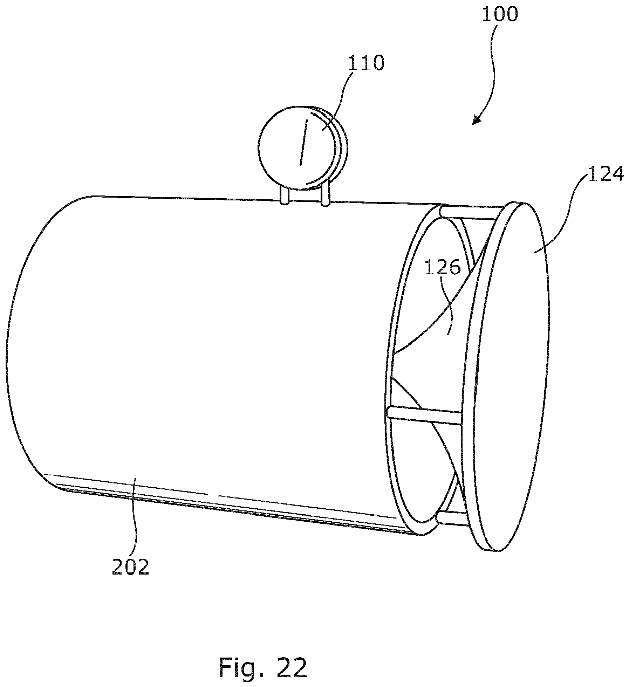

Fig. 21 shows a perspective illustration seen from the downstream, i.e. outlet end, of the conduit 202, and Fig. 22 shows a perspective illustration seen from the upstream, i.e. inlet end, of the conduit 202.

Hence, the leakage detector system 1 may comprise both detector units configured to detect and/or monitor inside a substantially closed chamber and/or oil leakage detectors for detecting in a surrounding atmosphere of the substantially closed chamber so that a fire prevention system is obtained which fully monitors the parameters of the environments which may cause an unintended and unwanted fire to occur.

Furthermore, the detector unit and/or the oil leakage detector may comprise indication means configured to illuminate in circumstances wherein the sensor is detecting, or they may comprise warning signal emitters.

The present invention has mainly been described in connection with combustion engines and engine rooms for detecting the presence of either gasses or fuel moist containing hydrocarbons, however, the present invention may also be used in connection with other applications such as power plants, chemical facilities and the like.

Although the invention has been described in the above in connection with preferred embodiments of the invention, it will be evident for a person skilled in the art that several modifications are conceivable without departing from the invention as defined by the following claims.

## Claims

1. A leakage detector system (1) comprising
- a substantially closed chamber (2) being defined by at least one face (3), the face (3) having an interior surface (4) and an exterior surface (5), the substantially closed chamber (2) containing a gas and/or a fluid,
- a detector unit (10) comprising a detector housing (11) having
- a first housing member (12) configured to house a detector device (13), and
- a second housing member (14) configured to house a sensor (15) for detecting the presence of gas and/or fluid in the substantially closed chamber, the sensor (15) is operatively connected with the detector device (13),
wherein the first housing member (12) is configured to be arranged on the exterior surface (5), and the second housing member (14) extends from the first housing member (12) and is configured to project through a face hole (16) in the at least one face (3) so that the second housing member (14) is arranged in the substantially closed chamber (2) ensuring that the sensor (15) detects inside the substantially closed chamber (2).

2. A leakage detector system (1) according to claim 1, further comprising a control unit (114) being operatively connected with the detector device (13).

3. A leakage detector system (1) according to claim 2, wherein the control unit (114) being configured to output a warning signal if the sensor (15) detects gas and/or fluid in the substantially closed chamber (2) exceeding a predetermined threshold value.

4. A leakage detector system (1) according to any of the preceding claims, wherein a locking member (17) is arranged on the exterior surface (5).

5. A leakage detector system (1) according to claim 4, wherein the locking member (17) is configured to lock the detector housing (11) to the face (3).

6. A leakage detector system (1) according to claim 4 and/or 5, wherein the detector housing (11) is detachable from the locking member (17).

7. A leakage detector system (1) according to any of the claims 4 to 6, wherein the locking member (17) is securely connected with the face (3).

8. A leakage detector system (1) according to any of the claims 4 to 7, wherein a sealing element (38) is arranged between the locking member (17) and the exterior surface (5).

9. A leakage detector system (1) according to any of the preceding claims, wherein the second housing member (14) has one or more house openings (21) for ensuring that the sensor (15) can detect gas and/or fluid.

10. A leakage detector system (1) according to any of the preceding claims, wherein the substantially closed chamber (2) is an engine chamber of a combustion engine (40).

11. A leakage detector system (1) according to any of the preceding claims, wherein the gas and/or fluid comprises hydrocarbons.

12. A leakage detector system (1) according to any of the preceding claims, wherein the sensor (15) is a gas sensor.

13. A leakage detector system (1) according to any of the preceding claims, wherein the detector unit (13) and/or the sensor (15) is configured to operate from about -25 degree Celsius to about 200 degree Celsius.

14. A combustion engine (40) comprising the leakage detector system (1) according to any of the preceding claims.

15. A vessel or offshore facility comprising the leakage detector system (1) according to any of the claims 1 to 13.
